Europäisches Patentamt

European Patent Office

Office européen des brevets

(19)

(11) **EP 0 570 127 B1**

(12) **EUROPEAN PATENT SPECIFICATION**

(45) Date of publication and mention
of the grant of the patent:
**28.07.1999 Bulletin 1999/30**

(51) Int Cl.⁶: **H04N 7/32**

(21) Application number: **93303268.2**

(22) Date of filing: **27.04.1993**

(54) **A motion estimating device for producing variable length coded motion vector**

Bewegungsabschätzer zur Bestimmung von kodierten Bewegungsvektoren mit variabler Länge

Dispositif d'estimation de mouvement pour produire des vecteurs de mouvement codés en longueur variable

(84) Designated Contracting States:
**DE FR GB**

(30) Priority: **08.05.1992 KR 775792**

(43) Date of publication of application:
**18.11.1993 Bulletin 1993/46**

(73) Proprietor: **SAMSUNG ELECTRONICS CO., LTD.**
**Suwon-city, Kyungki-do 441-373 (KR)**

(72) Inventor: **Jeong, Je-Chang**
**Yangjae-Dong, Seocho-Gu, Seoul (KR)**

(74) Representative: **Read, Matthew Charles et al**
**Venner Shipley & Co.**
**20 Little Britain**
**London EC1A 7DH (GB)**

(56) References cited:
EP-A- 0 446 001          EP-A- 0 527 446
CA-A- 2 079 862          DE-A- 3 929 280
US-A- 4 460 923          US-A- 4 562 468
US-A- 4 691 230

• IEEE TRANSACTIONS ON CIRCUITS AND SYSTEMS, vol.36, no.10, October 1989, NEW YORK US pages 1317 - 1325, XP000085319 YANG ET AL 'A Family of VLSI Designs for the Motion Compensation Block-Matching Algorithm'

## Description

The present invention relates to a motion estimating device comprising: data amount estimating means for estimating the amount of data required for variable length coding the output of the mean error calculating means; coded length operational means for calculating the length of code required to represent the displacement between said block of data in the reference signal and the block of data in the picture signal for each calculation when coded according to a variable length coding scheme; adding means for adding the amount of data required for variable length coding the output of the mean error calculating means and the length of code required to represent the displacement between the block of data in the reference signal and the block of data in the picture signal for each calculation; and minimum value seeking means for determining the minimum output of the adder for each picture block and outputting a motion vector signal representing the displacement between reference and picture signal blocks producing the minimum output from the adding means.

The present invention finds application in high definition television (HDTV), high definition video tape recorders (HD-VCR), digital VCRs, digital camcorders, multimedia displays, videophones, video conferencing and the like.

Interest has been shown recently in a data compression method which digitally encodes digital video and audio signals, for storage or transmission, and thereafter decodes the encoded signals for reproduction.

In the aforementioned devices such as HDTV, HD-VCR, digital VCRs, digital camcorders, multimedia displays, videophones, video conferencing and the like, international efforts are being made to formulate standardised signal formats and data transmission protocols.

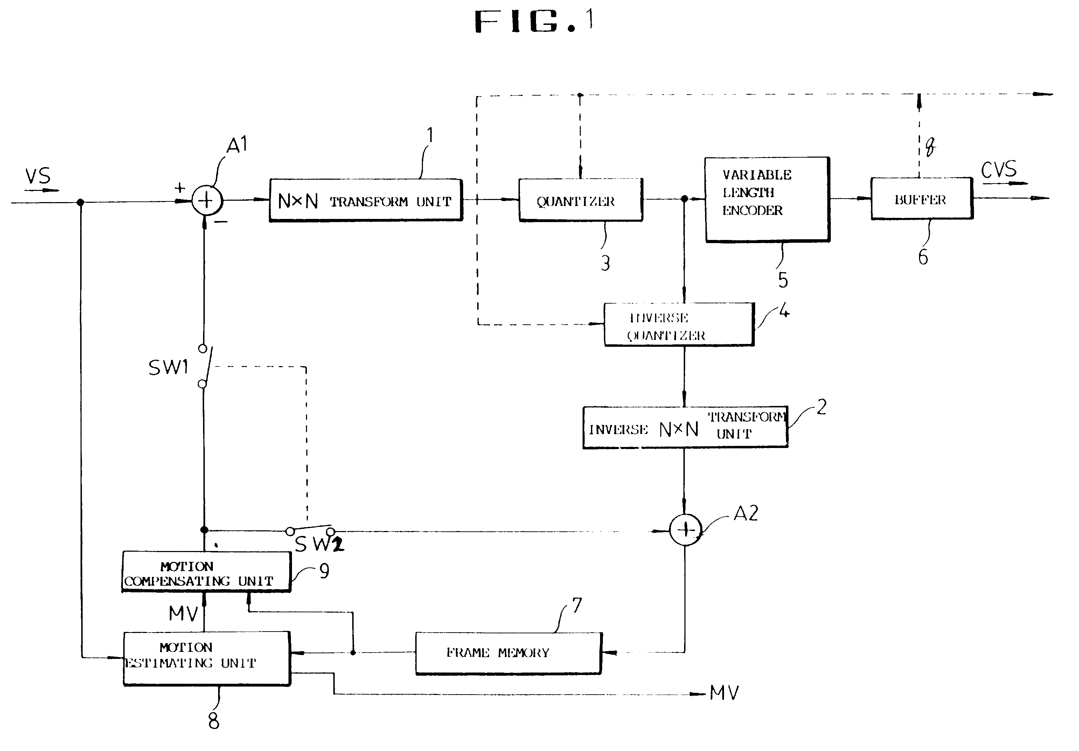

A known system for data compression is shown in Figure 1 which illustrates a block diagram of a conventional motion compensated Differential Pulse Code Modulation (DPCM) coded transmitting device, which reduces the amount of data to be transmitted, for a video signal.

According to Figure 1, an N X N transform unit 1 divides a picture into a gathering of small blocks of N X N (for example, N=8) in order to perform a data compression within the picture and performs a transform for respective blocks thereby to transform a video signal VS in the time domain into a signal in the frequency domain.

The signal energy is gathered mainly toward low frequency areas by the said transform.

The transform performed may be a Discrete Cosine Transform (DCT), a Walsh-Hadamard Transform (WHT), a Discrete Fourier Transform (DFT), a discrete Sine Transform (DST) or the like, although the DCT is most widely used.

A quantizer 3 quantizes transform coefficients outputted from the N X N transform unit 1 in accordance with a quantization step size q determined by reference to the contents of a buffer 6. In this way, the transform coefficients are optimised such that the human eye can hardly perceive the effects of quantisation and data compression.

The quantization step size q changes in accordance with the buffer state, and controls the quantization thereby to adjust the bit rate of the transmitted signal CVS, which is transmitted to a receiving terminal.

A variable length coder 5 makes the most of statistical characteristics of the representative values quantized from the quantizer 3 and performs variable length coding thereby to compress the data. Reference is directed to GB 9300180.0 (GB-A-2264605) for a fuller description of the coding.

The buffer 6 thus adjusts the transmitting bit rate of the data inputted from the variable length coder 5 thereby to output a substantially constant rate signal CVS, and at the same time, feedbacks the quantization step size q according to the degree to which the buffer is filled with data thereby to adjust the rate of output data produced by the quantizer 3, so that an overflow or underflow should not occur.

The data outputted from the quantizer 3 can be further compressed by a motion compensation method. More particularly, the data can be compressed by utilization of the similarity between successive frames of the picture data; if there is no change between pictures in the case of still pictures, the data can be compressed further.

A motion vector can be obtained from an estimation of motion for the blocks within the picture, and the block motions are compensated by utilization of a motion vector and because the difference between successive frames is very small, data compression can be achieved.

A motion compensated DPCM method that compensates for motion between successive pictures is shown in Figure 1.

The motion compensation is performed by a DPCM loop comprised of a frame memory 7, a motion estimation unit 8 and a motion compensation unit 9.

An inverse quantizer 4 inversely quantizes the quantized data prior to the performance of the motion compensation and an N X N inverse transform unit 2 transforms a signal in the frequency domain into a video signal in the time domain.

A motion estimating unit 8 receives video data for a prior picture stored in the frame memory 7 and also the current input video signal VS, and estimates motion as to from which place in the prior picture a currently-to-be-coded-block comes, and a motion vector MV thereof is obtained, thereby to be transmitted to a (remote) decoding unit (not shown) and simultaneously to be outputted to the motion compensation unit 9.

The motion compensating unit 9 reads video data from a corresponding position of the frame memory 7 according to the motion vector MV obtained from the motion estimating unit 8 thereby to compensate for the motion.

The compensated motion is added to an output of the N X N inverse transform unit 2 to thereafter be inputted to the frame memory 7.

The picture compensated from the motion compensating unit 9 is further inputted to a first mixer AI to thereby produce an error signal by being subtracted from a current picture signal VS.

At this moment, a first and a second switch SW1 and SW2 cut off an output signal from the motion compensation unit 9 either by block or by frame in order to prevent errors from enlarging on a picture where quantized noises generating from the DPCM loop are accumulated and restored, thereby to result in a realization of a role of intra frame coding.

A block matching method is widely utilized as the method of obtaining the motion vector from the aforementioned motion estimating unit 8. Firstly, the present picture is partitioned into a motion block of $N_1$ X $N_2$ pixels, and the position from which the said block has come in the reference picture is sought within a seek domain of $M_1$ X $M_2$ in the reference picture (where $M_n > N_n$). The place where a Mean Absolute Error MAE or Mean Square Error MSE is minimized, is determined as the value of the motion vector.

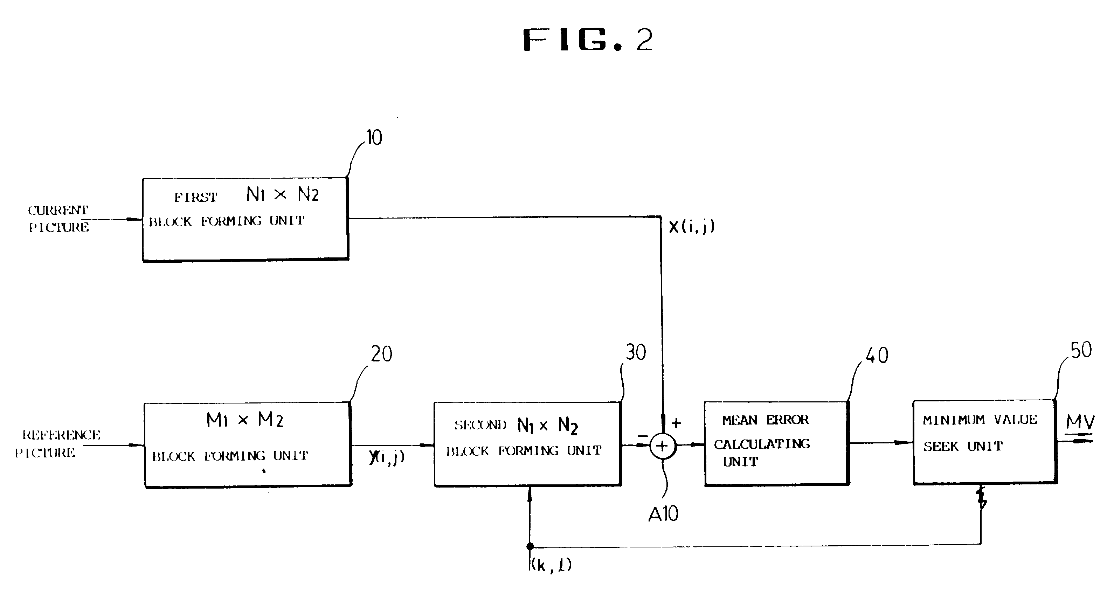

Figure 2 is a block diagram of a conventional motion estimating unit for determining the motion vector.

In Figure 2, a first $N_1$ X $N_2$ block forming unit 10, partitions the presently incoming picture into a block of size $N_1$ X $N_2$.

An $M_1$ X $M_2$ block forming unit 20 establishes a seek domain on a reference picture (a picture prior to a current picture or a prior picture reproduced from the DPCM loop) stored in the frame memory 7.

Thus, in order to discriminate from which position of the reference picture the said $N_1$ X $N_2$ block has moved, a seek block of $M_1$ X $M_2$ which is larger than the block of $N_1$ X $N_2$ currently to be coded is established.

A second $N_1$ X $N_2$ block forming unit 30 takes a data of $N_1$ X $N_2$ block size according to a horizontal/vertical displacement (k,l).

An adder A10 obtains a data error outputted from the first and second $N_1$ X $N_2$ block forming units 10 and 30.

A mean error calculating unit 40 calculates an absolute mean (or a square mean) of the errors outputted from the adder A10.

A minimum value seek unit 50 selectively outputs as the motion vector MV the horizontal/vertical displacement (k,l) when the same possesses the smallest error value out of the error values calculated from the mean error calculating unit 40.

In other words, the error value is calculated while the horizontal/vertical displacement (k,l) is successively changed, and a block is recognized as a moved block when the calculated error value is the smallest so that the horizonal/vertical displacement (k, l) at this moment is recognized as the motion vector MV to thereby be outputted.

Methods such as the Mean Absolute Error or Mean Square Error among pixels of respective blocks and the like are typically utilized to obtain the mean error from the mean error calculating unit 40.

However, although the conventional technique according to the aforesaid motion vector estimation is effective when a motion vector is transmitted as a code of fixed length, the final data amount is not minimized at all times when the motion vector is variable length coded.

Thus, there is a problem in that the motion vector tends to be increased if the code length of the motion vector is lengthened when the motion vector is variable length coded, even though the data amount of image signal is minimised.

This problem is addressed in US-A-4562468 and US-A-4460923. These documents disclose selecting a motion vector on the basis of the comparison between a current image block and a previously imput image block that produces the shortest motion vector code for transmission.

A device according to the present invention is characterised by mean error calculating means for successively calculating a mean error signal as a function of a mean error between respective blocks of data in reference and picture signals, and in that the data amount estimating means is arranged to estimate said amount of data, in dependence on an input quantization step size, and a mean error signal calculated by the mean error calculating means.

Preferably, the data amount estimating means calculates an estimate for said amount of data according to the formula:-

$$D1 = k_1 \times E(k,l) \times q^{-k_2}$$

where D1 is the estimated data amount, E(k,l) is the means error, q is the quantization step size and $k_1$ and $k_2$ are empirically derived constants.

A device according to the present invention preferably includes delaying means for delaying the motion vector from the minimum value seeking means, means for determining the difference between the delayed motion vector and the displacement between the present picture and reference signal block, and the coded length operational means operating on the basis of the output of the means for determining the difference between the delayed motion vector and the displacement between the present picture and reference signal blocks.

A device according to the present invention preferably includes means for selectively applying the delayed motion vector to the means for determining the difference between the delayed motion vector and the displacement between the present picture and reference signal block to thereby switch between pulse code modulation and differential pulse code modulation representation of the motion vector.

A device according to the present invention preferably includes means for producing data compressed signals corresponding to successive ones of said picture signals utilising a variable length code having an adjustable quantization step of a value which is varied to control the data transmission rate, said parameter determining means being responsive to the value of said step.

Preferably, said mean error calculating means comprises first means for forming a first block of data from said picture signal; second means for forming a block of data from the reference picture signal larger than said second block; means for successively producing from data in the second block, blocks of data of the same dimensions as the first block but dimensionally shifted within the second block in response to applied coordinate signals.

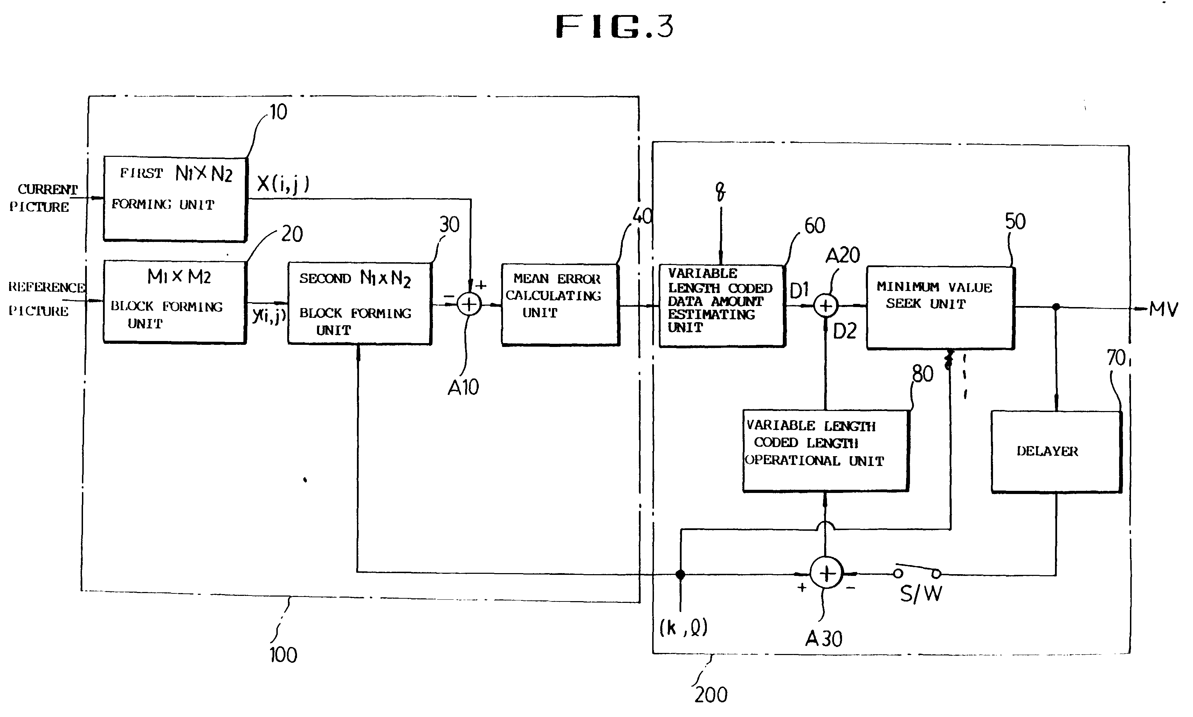

An embodiment of the present invention will now be described, by way of example, with reference to Figure 3 of the accompanying drawings, in which:

Figure 1 is a block diagram of a conventional motion compensated coding device;
Figure 2 is a block diagram of a conventional motion estimating device; and
Figure 3 is a block diagram of a motion estimating device for a system in accordance with the present invention.

With reference to Figure 3, the motion estimating device comprises: a mean error calculating means 100 for calculating a mean error between pixel data of a reference picture and a current picture, for estimating motion; and a motion vector setting means 200 which, in response to receipt of the mean error outputted from the mean error calculating means 100 and also the quantized step size q generated according to the degree to which the buffer 6, (see Figure 1) is filled with data, establishes as a motion vector MV as a horizontal/vertical displacement (k,l) wherein data to be variable length coded for transmission is minimized.

The mean error calculating means 100 constructed as above comprises: a first $N_1 \times N_2$ block forming unit 10 for partitioning the currently incoming picture into a pixel block of $N_1 \times N_2$ size; an $M_1 \times M_2$ block forming unit 20 for establishing a seek domain on a reference picture (a picture preceding to a current picture, or a preceding picture reproduced from the DPCM loop) stored in the frame memory 7; a second $N_1 \times N_2$ block forming unit 30 for taking a pixel data of $N_1 \times N_2$ block size in accordance with the horizontal/vertical displacement (k,l) among the pixel data established in the $M_1 \times M_2$ block forming unit 20; an adder A10 for obtaining a data error outputted from the first and second $N_1 \times N_2$ block forming units 10 and 30; and a mean error calculating unit 40 for calculating an absolute means (or mean square) of errors output from the adder A10.

The motion vector setting means 200 comprises: a variable length coded data amount estimating unit 60 for estimating the mean error outputted from the mean error calculating unit 100 and the data amount of the video signal variable length coded in accordance with the quantized step size q; a coded length operational unit 80 for determining the coded length of the variable length coding when the current horizontal/vertical displacement (k, l) is selected as a motion vector; a second adder A20 for adding the output data D1 from the variable length coded data amount estimating unit 60 to output data D2 from the coded length operational unit 80; a minimum value seek unit 50 for receiving the data D1 + D2 added at the second adder A20 and for further receiving the horizontal/vertical displacement (k,l) to thereafter seek the horizontal/vertical displacement (k, l) where the adder data D1 + D2 is minimized, so that the sought horizontal/vertical displacement (k,l) can be selected as the motion vector MV to thereby be outputted; a delayer 70 for delaying the motion vector MV outputted from the minimum value seek unit 50 for a predetermined period of time; and a third adder A30 for calculating an error between the motion vector MV delayed at the delayer 70 and the current horizontal/vertical displacement (k, l) to thereafter output the same to the coded length operational unit 80.

Next, operation of the motion estimating device will be described in more detail.

When frame data VS of the current picture is inputted, the first $N_1 \times N_2$ block forming unit 10 partitions the current picture into a pixel block of $N_1 \times N_2$ size to thereafter output the pixel data of corresponding blocks to the first adder A10.

The $M_1 \times M_2$ block forming unit 20 partitions a frame data of the reference picture inputted from the frame memory 7 as illustrated in Figure 1 into a seek domain block of $M_1 \times M_2$ size, where M > N.

The reference picture denotes a picture preceding a current picture or a preceding picture reproduced from the DPCM loop but in this embodiment of the present invention, a simply inputted video signal can be stored on a separate frame memory, delayed and taken as a reference picture.

In other words, in order to discriminate which position of the reference picture the $N_1 \times N_2$ blocks has moved to form the current picture, a seek block of $M_1 \times M_2$ which is larger than a block of $N_1 \times N_2$ currently calling for encoding is established.

The second $N_1$ X $N_2$ block forming unit 30 partitions a pixel block of M1 X M2 seek domain in the $M_1$ X $M_2$ block forming unit 20 into a pixel block of $N_1$ X $N_2$ size to thereby output the pixel data in accordance with the horizontal/ vertical displacement (k, l).

The first adder A10 adds the data outputted from the first $N_1$ X $N_2$ block forming unit 10 to the data outputted from the second $N_1$ X $N_2$ block forming unit 30 in accordance with the horizontal/vertical displacement (k, l), so that an error resulting out of these two data can be outputted.

The mean error calculating unit 40, when the error outputted from the first adder A10 is inputted, calculates a mean error of the pixel data.

As previously stated, methods such as a Mean Absolute Error MAE or Mean Square Error MSE can be used to obtain the mean error in the mean error calculating unit 40. An explanation employing the Mean Absolute Error MAE method will now be given as an example.

A calculating formula for the Mean Absolute Error method can be defined as follows:

$$E(k,l) = \frac{1}{N_1 N_2} \sum_{i=1}^{N_1} \sum_{j=2}^{N_2} x\{(i,j)-Y(i+k, j+1)\}$$

Formula 1

The variable length coded data amount estimating unit 60, when the mean error E (k, l) calculated from Formula 1 and the quantized step size q are inputted, estimates a data amount generated when the error signal {x(i, j)-y (i+k,j+1)} is variable length-coded from the mean error E(k, l) and quantized step size q.

At this moment, the estimated data amount (D1) is approximately proportionate to the mean error E (k, l) and is inversely proportional to the step size q, which can be expressed in the following formula

$$D1 = k_1 \times E(k, l) \times q^{-k2}$$

Formula 2

From the foregoing Formula 2, $k_1$ and $k_2$ are any integers which can be determined experimentally to achieve optimum values.

The data amount D1 estimated by the formula 2 in the variable length coded data amount estimating unit 60 is inputted to the second adder A20.

Meanwhile, at the coded length operational unit 80, when the horizontal/vertical displacement (k, l) is selected as a motion vector, the displacement is directly transformed to Pulse Code Modulation PCM or to a DPCM which due to the action of adder A30 seeks a difference between a motion vector of preceding block and a motion vector of present block, to perform a variable length coding on this difference, and to output the resulting code (data amount : D2).

At this moment, the coded length (D2) has already been determined in accordance with a statistical characteristic.

The second adder A20 adds the coded length D2 outputted from the coded length operational unit 80 to a video signal coded data amount D1 outputted from the variable length coded data amount estimating unit 60.

A final data amount D1 + D2 added at the second adder A20 is inputted to a minimum value seek unit 50 which is responsive to changes in the horizontal/vertical displacement (k, l) and detects a horizontal/vertical displacement where the final data amount D1 + D2 is minimized, to thereby output the same as a motion vector MV.

The delayer 70 delays the motion vector MV outputted from the minimum value seek unit 50 to thereafter output the same.

In other words, the motion vector MV detected from the foregoing process is stored on the delayer 70 for the DPCM of a motion vector in the next block.

A switch SW selects PCM/DPCM in order to encode the motion vector.

As seen from the foregoing, the motion estimating device, having regard to the variable length coding, seeks an optimum motion vector, generating the minimum data amount needed to make the motion vector variable-length encoded, so that the problem of increased transmission data can be solved.

It will be apparent to one skilled in the art that, although the foregoing description of the embodiment has been presented for the purpose of illustration and description, various changes and modifications can be made.

In particular, in the embodiment in Figure 3, an example of a block matching according to a full search was given, but it will be apparent that a three step search, hierarchical search and motion vector estimating methods other than the full search can be applied to the present invention.

## Claims

1. A motion estimating device comprising;

   data amount estimating means (60) for estimating the amount of data (D1) required for variable length coding the output of mean error calculating means (100);

   coded length operational means (80) for calculating the length of code (D2) required to represent the displacement between a block of data in a reference signal and the corresponding block of data in a picture signal for each calculation when coded according to a variable length coding scheme;

   adding means (A20) for adding the amount of data (D1) required for variable length coding the output of the mean error calculating means (100) and the length of code (D2) required to represent the displacement between the block of data in the reference signal and the block of data in the picture signal for each calculation; and

   minimum value seeking means (50) for determining the minimum output of the adder for each picture block and outputting a motion vector signal (MV) representing the displacement between reference and picture signal blocks producing the minimum output from the adding means;

   **characterised by**

   mean error calculating means (100) for successively calculating a mean error signal (E(k, l)) as a function of a mean error between respective blocks of data in reference and picture signals, and **in that** the data amount estimating means (60) is arranged to estimate said amount of data, in dependence on an input quantization step size (q), and a mean error signal calculated by the mean error calculating means (100).

2. A device according to claim 1, wherein the data amount estimating means (60) calculates an estimate for said amount of data according to the formula:-

$$D1 = k_1 \times E(k,l) \times q^{-k_2}$$

   where D1 is the estimated data amount, E(k,l) is the mean error, q is the quantization step size and $k_1$ and $k_2$ are empirically derived constants.

3. A device according to claim 1 or 2, including delaying means for delaying the motion vector (MV) from the minimum value seeking means (50), means (A30) for determining the difference between the delayed motion vector (MV) and the displacement between the present picture and reference signal block, and the coded length operational means (80) operating on the basis of the output of the means (A30) for determining the difference between the delayed motion vector and the displacement between the present picture and reference signal blocks.

4. A device according to claim 3, including means (S/W) for selectively applying the delayed motion vector (MV) to the means (A30) for determining the difference between the delayed motion vector (MV) and the displacement between the present picture and reference signal block to thereby switch between pulse code modulation and differential pulse code modulation representation of the motion vector (MV).

5. A device according to any preceding claim, including means for producing data compressed signals (CVS) corresponding to successive ones of said picture signals utilising a variable length code having an adjustable quantization step (q) of a value which is varied to control the data transmission rate, said parameter determining means being responsive to the value of said step.

6. A device according to any preceding claim, wherein said mean error calculating means (100) comprises first means (10) for forming a first block of data from said picture signal; second means (20) for forming a block of data from the reference picture signal larger than said second block; means for successively producing from data in the second block, blocks of data of the same dimensions as the first block but dimensionally shifted within the second block in response to applied coordinate signals (k, l).

**Patentansprüche**

1. Bewegungsschätzvorrichtung, mit:

einer Datenmengen-Schätzeinrichtung (60) zum Schätzen der Menge von Daten (D1), die für eine Codierung mit variabler Länge des Ausgangssignals einer Durchschnittsfehler-Berechnungseinrichtung (100) erforderlich sind;
einer Codierungslängen-Operationseinrichtung (80) zum Berechnen der Codelänge (D2), die erforderlich ist, um die Verschiebung zwischen einem Datenblock in einem Referenzsignal und einem entsprechenden Datenblock in einem Bildsignal für jede Berechnung darzustellen, wenn die Codierung in Übereinstimmung mit dem Codierungsschema mit variabler Länge erfolgt;
einer Addierereinrichtung (A20) zum Addieren der Datenmenge (D1) die für die Codierung mit variabler Länge des Ausgangssignals der Durchschnittsfehler-Berechnungseinrichtung (100) erforderlich ist, zur Codelänge (D2), die erforderlich ist, um die Verschiebung zwischen dem Datenblock im Referenzsignal und dem Datenblock im Bildsignal für jede Berechnung darzustellen;
einer Minimalwert-Sucheinrichtung (50) zum Bestimmen des minimalen Ausgangssignals des Addierers für jeden Bildblock und zum Ausgeben eines Bewegungsvektorssignals (MV), das die Verschiebung zwischen dem Referenzblock und dem Bildsignalblock, die das minimalen Ausgangssignal von der Addierereinrichtung ergibt, darstellt;

**gekennzeichnet durch**
eine Durchschnittsfehler-Berechnungseinrichtung (100) zum sukzessiven Berechnen eines Durchschnittsfehlersignals (E(k,l)) als eine Funktion eines Durchschnitts fehlers zwischen den Datenblöcken im Referenzsignal bzw. im Bildsignal, und dadurch, daß die Datenmengen-Schätzeinrichtung (60) so beschaffen ist, daß sie die Datenmenge in Abhängigkeit von einer Eingangsquantisierungsschrittgröße (q) und des Durchschnittfehlersignals, das von der Durchschnittsfehler-Berechnungseinrichtung (100) berechnet wird, schätzt.

2. Vorrichtung nach Anspruch 1, wobei die Datenmengen-Schätzeinrichtung (60) einen Schätzwert für die Datenmenge in Übereinstimmung mit der folgenden Formel berechnet:

$$D1 = k_1 \times E(k,l) \times q^{-k_2}$$

wobei D1 die geschätzte Datenmenge ist, E(k,l) der Durchschnittsfehler ist, q die Quantisierungsschrittgröße ist und $k_1$ und $k_2$ empirisch abgeleitete Konstanten sind.

3. Vorrichtung nach Anspruch 1 oder 2, mit einer Verzögerungseinrichtung zum Verzögern des Bewegungsvektors (MV) von der Minimalwert-Sucheinrichtung (50), einer Einrichtung (A30) zum Bestimmen der Differenz zwischen dem verzögerten Bewegungsvektor (MV) und der Verschiebung zwischen dem momentanen Bild und dem Referenzsignalblock, und der Codierungslängen-Operationseinrichtung (80), die anhand des Ausgangssignals der Einrichtung (A30) zum Bestimmen der Differenz zwischen dem verzögerten Bewegungsvektor und der Verschiebung zwischen dem momentanen Bild und den Referenzsignalblöcken arbeitet.

4. Vorrichtung nach Anspruch 3, mit einer Einrichtung (S/W) zum wahlweisen Eingeben des verzögerten Bewegungsvektors (MV) in die Einrichtung (A30) zum Bestimmen der Differenz zwischen dem verzögerten Bewegungsvektor (MV) und der Verschiebung zwischen dem Block des momentanen Bildes und dem Block des Referenzsignals, um dadurch zwischen der Darstellung mit Impulscodemodulation und der Darstellung mit differentieller Impulscodemodulation des Bewegungsvektors (MV) umzuschalten.

5. Vorrichtung nach irgendeinem vorangehenden Anspruch, mit einer Einrichtung zum Erzeugen von datenkomprimierten Signalen (CVS), die aufeinanderfolgenden Bildsignalen entsprechen, unter Verwendung eines Codes mit variabler Länge, der einen einstellbaren Quantisierungsschritt (q) mit einem Wert besitzt, der geändert wird, um die Datenübertragungsrate zu steuern, wobei die Parameterbestimmungseinrichtung auf den Schrittwert anspricht.

**6.** Vorrichtung nach irgendeinem vorangehenden Anspruch, wobei die Durchschnittsfehler-Berechnungseinrichtung (100) eine erste Einrichtung (10) zum Bilden eines ersten Datenblocks aus dem Bildsignal, eine zweite Einrichtung (20) zum Bilden eines Datenblocks aus dem Referenzbildsignal, der größer als der zweite Block ist; eine Einrichtung, die aus Daten im zweiten Block sukzessive Datenblöcke mit den gleichen Abmessungen wie der erste Block erzeugt, die jedoch als Antwort auf eingegebene Koordinatensignale (k,l) im zweiten Block dimensional verschoben sind.

**Revendications**

**1.** Dispositif d'estimation de mouvement comprenant :

des moyens d'estimation de quantité de données (60) pour estimer la quantité de données (D1) requises pour un codage de longueur variable de la sortie de moyens de calcul d'erreur moyenne (100) ;
des moyens opérationnels de longueur codée (80) pour calculer la longueur de code (D2) requise pour représenter le déplacement entre un bloc de données dans un signal de référence et le bloc de données correspondant dans un signal d'image pour chaque calcul lors du codage selon une configuration de codage à longueur variable ;
des moyens d'addition (A20) pour additionner la quantité de données (D1) requises pour le codage à longueur variable de la sortie des moyens de calcul d'erreur moyenne (100) et la longueur de code (D2) requise pour représenter le déplacement entre le bloc de données dans le signal de référence et le bloc de données dans le signal d'image pour chaque calcul ; et
des moyens de recherche de valeur minimale (50) pour déterminer la sortie minimale de l'additionneur pour chaque bloc d'image et délivrer en sortie un signal de vecteur de mouvement (MV) représentant le déplacement entre les blocs de signaux de référence et d'image produisant la sortie minimale à partir des moyens d'addition ;

caractérisé par :
des moyens de calcul d'erreur moyenne (100) pour calculer successivement un signal d'erreur moyenne (E (k, l)) en fonction d'une erreur moyenne entre des blocs de données respectifs dans les signaux de référence et d'image, et en ce que les moyens d'estimation de quantité de données (60) sont configurés de façon à estimer ladite quantité de données, en fonction d'une taille d'étape de quantification d'entrée (q), et d'un signal d'erreur moyenne calculé par les moyens de calcul d'erreur moyenne (100).

**2.** Dispositif selon la revendication 1, dans lequel les moyens d'estimation de quantité de données (60) calculent une estimation pour ladite quantité de données selon la formule suivante :

$$D1 = k_1 \times E(k,l) \times q^{-k_2}$$

où D1 est la quantité de données estimée, E(k,l) est l'erreur moyenne, q est la taille d'étape de quantification, et $k_1$ et $k_2$ sont des constantes dérivées empiriquement.

**3.** Dispositif selon la revendication 1 ou 2, comprenant des moyens de retard pour retarder le vecteur de mouvement (MV) venant des moyens de recherche de valeur minimale (50) , des moyens (A30) pour déterminer la différence entre le vecteur de mouvement retardé (MV) et le déplacement entre l'image actuelle et le bloc de signaux de référence, et les moyens opérationnels de longueur codée (80) fonctionnant en fonction de la sortie des moyens (A30) de façon à déterminer la différence entre le vecteur de mouvement retardé et le déplacement entre l'image actuelle et les blocs de signaux de référence.

**4.** Dispositif selon la revendication 3, comprenant des moyens (S/W) pour appliquer de façon sélective le vecteur de mouvement retardé (MV) aux moyens (A30) pour déterminer la différence entre le vecteur de mouvement retardé (MV) et le déplacement entre l'image actuelle et le bloc de signaux de référence, de façon à réaliser par conséquent une commutation entre la représentation de modulation à codage d'impulsions et de modulation à codage d'impulsions différentielles du vecteur de mouvement (MV).

**5.** Dispositif selon l'une quelconque des revendications précédentes, comprenant des moyens pour produire des signaux comprimés de données (CVS) correspondant à des signaux successifs desdits signaux d'image en utilisant un code à longueur variable comportant une étape de quantification ajustable (q) d'une valeur qui varie de façon à commander le débit de transmission de données, lesdits moyens de détermination de paramètres réagissant à la valeur de ladite étape.

6. Dispositif selon l'une quelconque des revendications précédentes, dans lequel lesdits moyens de calcul d'erreur moyenne (100) comprennent des premiers moyens (10) pour former un premier bloc de données à partir dudit signal d'image ; des deuxièmes moyens (20) pour former un bloc de données à partir du signal d'image de référence qui soit plus grand que ledit deuxième bloc ; des moyens pour produire successivement, à partir de données dans le deuxième bloc, des blocs de données ayant des dimensions identiques à celles du premier bloc, mais décalées du point de vue dimensionnel à l'intérieur du deuxième bloc en réponse à l'application de signaux de coordonnées (k, l).

# FIG.1

EP 0 570 127 B1

# FIG. 2

CURRENT PICTURE → FIRST $N_1 \times N_2$ BLOCK FORMING UNIT (10)

$x(i,j)$

REFERENCE PICTURE → $M_1 \times M_2$ BLOCK FORMING UNIT (20)

$y(i,j)$ → SECOND $N_1 \times N_2$ BLOCK FORMING UNIT (30)

$(k,l)$

A10: $+ / -$ adder

MEAN ERROR CALCULATING UNIT (40)

MINIMUM VALUE SEEK UNIT (50) → MV

11

FIG.3